# EUROPEAN PATENT SPECIFICATION

(11) **EP 3 163 098 B1**
(45) Date of publication and mention of the grant of the patent: **24.10.2018**
(21) Application number: 16195652.9
(22) Date of filing: 26.10.2016
(51) Int. Cl.: F16C 1/10, B60H 1/00

(54) **A DOUBLE CABLE MOTION TRANSMITTING DEVICE ADAPTABLE TO DIFFERENT ROTATION DIRECTIONS**
ZWEI BOWDENZÜGE BESTÄTIGUNGSMECHANISMUS EINSETZBAR FÜR VERSCHIEDENE DREHRICHTUNGEN
APPAREIL DE TRANSMISSION DE MOUVEMENT PAR DOUBLE CÂBLE ADAPTABLE POUR DIFFÉRENTES DIRECTIONS DE ROTATION

(30) Priority: 29.10.2015 IT UB20155177
(43) Date of publication of application: 03.05.2017
(73) Proprietor: DENSO THERMAL SYSTEMS S.p.A., 10046 Poirino (Torino) (IT)
(72) Inventor: BELLUOMO, Denis, I-10046 POIRINO (Torino) (IT); CARBONE, Andrea, I-10046 POIRINO (Torino) (IT)
(74) Representative: Vanzini, Christian

(56) References cited:
- EP-A2- 1 818 550
- DE-A1-102004 009 332

## Description

The present invention relates in a general way to double-cable motion transmission devices of the type comprising
a case of plastic material, on which is formed a circular seat, in the centre of which is formed a stem-like part having a through hole, and
a rotating pulley of plastic material, capable of receiving a pair of control cables to be attached to it for connection to a second pulley, said rotating pulley comprising a hub part extending within the through hole.

Devices of this kind are commonly used in control assemblies known in the art as "pull-pull" controls, and comprise a control device and an actuator device, both equipped with a rotating pulley and interconnected by two cables, both of which are attached to the pulley of the control device and also to the pulley of the actuator device. An example of such an assembly is described in the publication EP 2 014 490 by the present applicant. EP 1 818 550 discloses another double-cable motion transmission device, wherein the two rotating pulleys are different.

In terms of production, it has been observed that there is a need to manufacture these assemblies using a few basic components that can be used in multiple applications and various configurations.

In a particular case of application, a rotary element associated with the actuator device (such as a flap of an air conditioning system) has to rotate in the opposite direction to a rotary element (such as a knob) associated with the control device. Since double-cable control assemblies are usually made in such a way that the pulleys of the control device and the actuator assembly rotate in a matching way, further mechanical elements must be combined with the control assembly in the application described above, in order to reverse the direction of rotation. Clearly, the need to use additional elements for the reverse rotation configuration is undesirable in terms of production.

One object of the present invention is therefore to provide a control assembly that can be used in the reversed rotation configuration without adding further components.

This object is achieved according to the invention with a control system comprising
a first and a second assembly, each assembly comprising a support wall and a rotary control member, and
a double-cable motion transmission assembly for transmitting motion from the control member of the first assembly to the control member of the second assembly, comprising a first and a second device which are constructively identical to one another and are interconnected by a flexible double-cable transmission, said first and second device, respectively, being fastened to the support wall of the first assembly and to the support wall of the second assembly, wherein each device comprises
   - a case of plastic material, on which is formed a circular seat, in the centre of which is formed a stem-like part having a through hole, and
   - a rotating pulley of plastic material, capable of receiving a pair of transmission control cables for attachment to it, said rotating pulley comprising a hub part extending within the through hole,
   - wherein, on each of the opposed ends of the hub part of the rotating pulley, there is formed a respective first and second coupling seat capable of receiving a shaft of a control member and comprising at least one prismatic surface portion,
wherein the control member of the first assembly and the first motion transmission device are positioned on opposite sides of the support wall of the first assembly, and the control member of the second assembly and the second motion transmission device are positioned on opposite sides of the support wall of the second assembly,
characterized in that each control member comprises a shaft having a lateral surface portion whose shape is complementary to the prismatic surface portions of the coupling seats of the hub part of the rotating pulley, the shaft of the control member of the first assembly being fitted into the first coupling seat of the rotating pulley of the first device, and the shaft of the control member of the second assembly being fitted into the second coupling seat of the rotating pulley of the second device, so that the first device has its pulley side facing the support wall of the first assembly, and the second device has its base side facing the support wall of the second assembly.

The configuration according to the invention employs a transmission assembly that can be used either in the matching rotation configuration or in the reverse rotation configuration without the addition of further mechanical elements. For use in the reverse rotation configuration according to the invention, the transmission assembly is mounted so that one of the motion transmission devices is rotated through 180° about the axis defined by the transmission cables, and the rotary member (such as a knob) associated with it is fastened to the opposite end of the hub part of the rotating pulley from the end of the hub part of the rotating pulley normally used to fasten the rotary members in the matching rotation configuration.

Preferred embodiments of the invention are defined in the dependent claims, which are to be considered as an integral part of the present description.

Further characteristics and advantages of the motion transmission device according to the invention will be made clearer by the following detailed description of an embodiment of the invention, given with reference to the attached drawings which are provided purely as non-limiting illustrations, in which:
- Figure 1 is a perspective view of a double-cable transmission assembly that can be used in the present invention;
- Figure 2 is a view on an enlarged scale of one of the motion transmission devices of the assembly of Figure 1;
- Figure 3 is a sectional view of the motion transmission device of Figure 2;
- Figures 4 to 7 are perspective views (Figs. 4 and 5) and plan views (Figs. 6 and 7) from opposite sides of a pulley of the device of Figure 2;
- Figure 8 is a simplified sectional view representing the device of Figure 2 in two different mounting configurations; and
- Figures 9 and 10 are exploded views showing two transmission assemblies, in a matching rotation configuration and a reversed rotation configuration respectively, associated with a control panel and with an air conditioning unit.

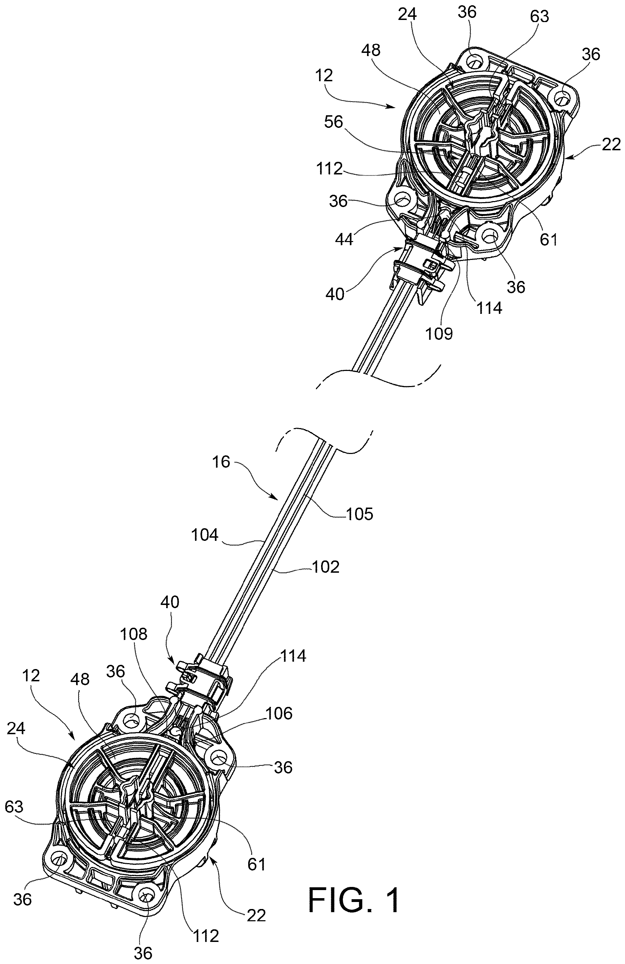

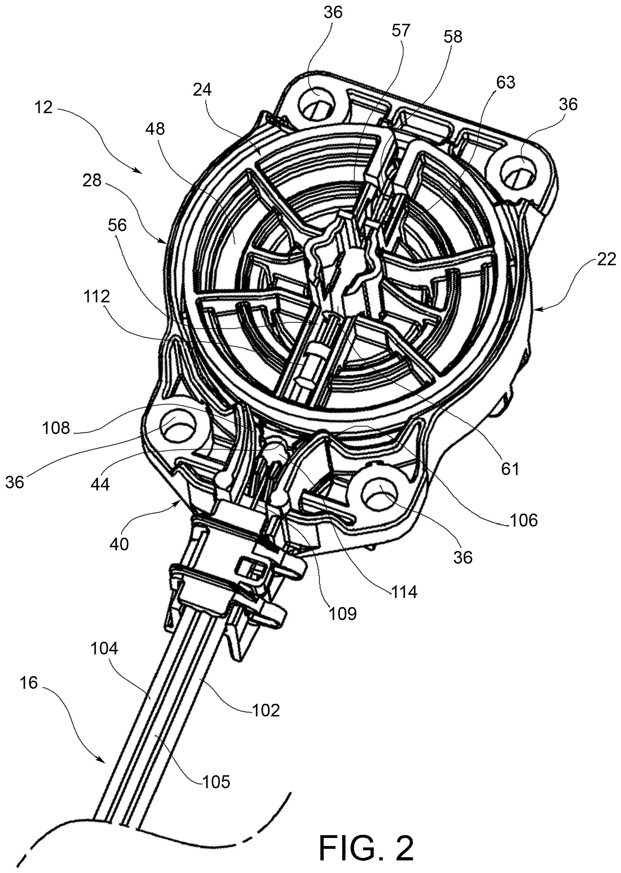

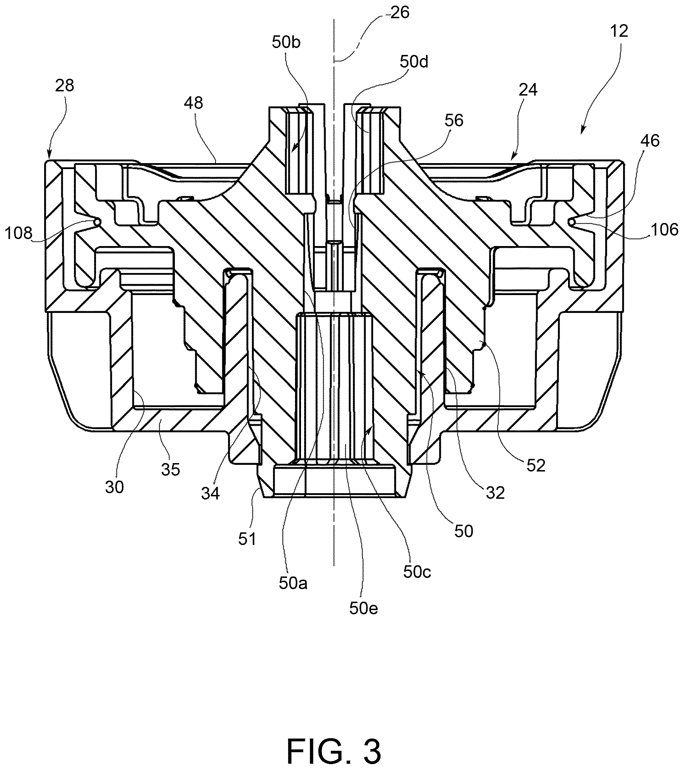

With reference Figure 1, a control or transmission assembly of the "pull-pull" type is shown, comprising two identical motion transmission devices 12 interconnected by a double-cable flexible transmission 16. For convenience, only one of the motion transmission devices is shown in each of the subsequent Figures 2 to 8, and reference will be made hereafter to only one of the devices, unless explicitly stated otherwise.

The two motion transmission devices 12 of the control assembly are adapted to be fastened to respective supports (not shown). For example, one of them could be fastened to a support placed on the dashboard of a vehicle, while the second could be fastened to the casing of an air conditioning and distribution unit. The control assembly may be used, for example, to adjust the temperature of the flow of air admitted into the passenger compartment of the vehicle, or to select the direction of outflow of the air (towards the feet, the front outlets, the side outlets, or the defroster, or in other directions). The assembly may also be used to select the direction of inflow of the air to be conditioned (recirculation or external supply). In general, the control assembly may be used in any application where a device is to be actuated remotely by means of a rotary control.

The motion transmission device 12 comprises a case 22 and a pulley 24 mounted rotatably relative to the case 22 about an axis 26. Preferably, both the case 22 and the pulley 24 are made of injection-moulded plastic material.

The case 22 has a front wall 28 on which is formed a circular seat 30, in the centre of which is formed a stem-like part 32 having a through hole 34. The circular seat 30 has a bottom wall 35, which is connected centrally to the stem-like part 32 and is connected peripherally to the rest of the case 22 by means of a lateral wall of the circular seat 30. The case 22 has fastening holes 36 positioned at respective corners of the case 22. The case 22 also has an integral guide portion 40 positioned above the front wall 28. A fastening seat 44 is provided in a median position relative to the guide 40.

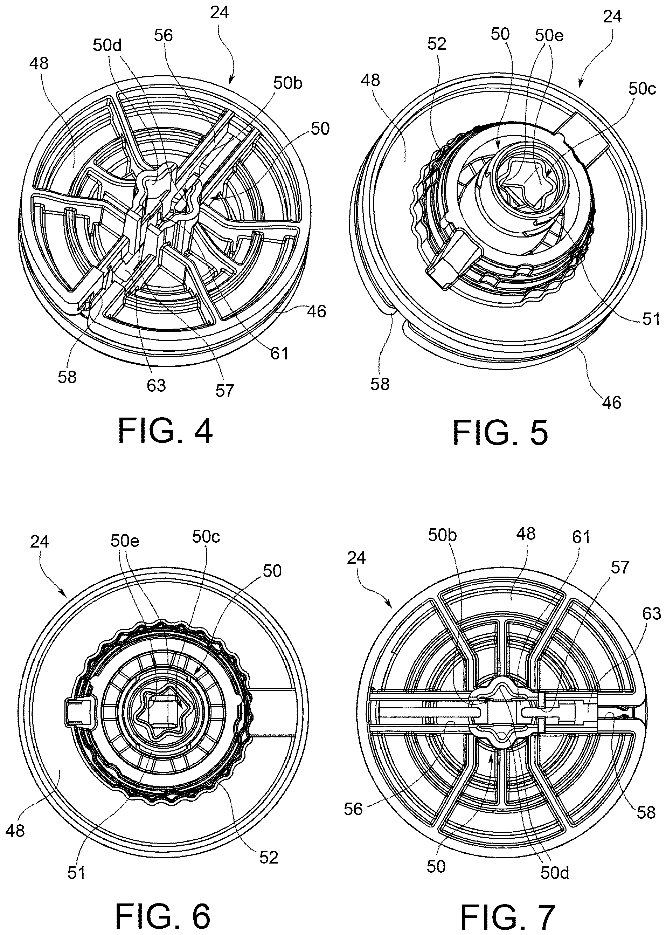

With particular reference to Figures 4 to 7, the pulley 24 comprises a circumferential groove 46 for winding up the control cables. The pulley 24 has a face 48 having a central hub part 50 extending into the through hole 34. The hub part 50 of the pulley also has a central through hole 50a. The hub part 50 of the pulley 24 also has a free end with a tapered radial projection 51, snap-fitted into the through hole 34 of the case 22. A collar part 52, concentric with the hub part 50, is also formed on the face 48 of the pulley 24, this collar part extending into the circular seat 30 around the stem-like part 32. The pulley 24 bears on the case 22 by means of a part of its face 48 interposed between the hub part 50 and the collar part 52.

On each of the opposed ends of the hub part 50 of the rotating pulley 24, there is formed a first and second coupling seat 50b, 50c, comprising at least one prismatic surface portion 50d, 50e. The prismatic surface portion, or portions, 50d of the coupling seat 50b at one end of the hub part 50 of the rotating pulley 24 is, or are, identical in shape (in a plan view from the respective side of the pulley 24) to the prismatic surface portion 50e of the coupling seat 50c at the other end of the hub part 50 of the rotating pulley 24. In the illustrated example, the coupling seat 50b on the upper side of the pulley 24 has two opposed prismatic surface portions 50d, which are identical to two opposed prismatic surface portions 50e of the coupling seat 50c on the lower side of the pulley 24.

A guide 56, extending along a diametral axis of the pulley and communicating with the circumferential groove 46 of the pulley, is also formed on the face 48 of the pulley 24. In the illustrated example, the guide 56 is formed between a pair of transverse walls projecting from the face 48 of the pulley, and has an open end through which the guide 56 communicates with the circumferential groove 46. The guide 56 has a first and a second constriction 57 and 58. The first and second constriction create a first and a second fastening seat 61 and 63 respectively within the guide 56.

The case and the pulley of the second motion transmission device 12 are identical to the case 22 and the pulley 24 of the first motion transmission device 12 described above. The case 22 and the pulley 24 are configured so that they may be associated equally well with the specific components of the two motion transmission devices. The advantages of being able to use the same main components for both devices are considerable, both in terms of production cost, and in terms of the simplicity of assembling the control assembly.

The flexible transmission 16 comprises a sheath comprising two parallel guides 102, 104 fastened to each other, with respective cables 106, 108 inserted slidably into these guides. Between the aforesaid two guides 102, 104 there is interposed a third guide 105, into which is inserted a fixed cable 109 for the purpose of spacing apart the two devices 12 and 14 and fixing the free length of the cable over time. The slidable cables 106, 108 are inserted into the guide portions 40 of the cases 22 of the first and second motion transmission device, and are wound on to respective portions of the circumferential grooves 46 of the pulleys 24. The opposite ends of the two cables 106, 108 are each fastened to a terminal element or nipple 112, one of which is housed in the first seat 61 of the pulley 24 of the first device 12, while the other is housed in the second seat of the pulley of the second device 12. Each nipple 112 may be attached to the corresponding pulley 24, or further elements may be provided to attach each end of the flexible transmission to the corresponding pulley 24. However, the manner in which the cables are fastened to the pulleys is not relevant for the purposes of the present invention.

The third cable 109 is equipped at its ends with its own spherical terminal elements or nipples 114 which are inserted into the seats 44 of the cases 22. The third cable 109 is slidable in the third guide 105 of the sheath placed between the two guides 102, 104 of the sheath.

The cases 22 of the two motion transmission devices are fastened to the respective supports (not shown) by screws or similar fasteners which extend through the holes 36 and engage in corresponding fastening portions provided on these supports.

Evidently, the motion transmission device described above enables a control assembly to be made from a very limited number of parts, that is to say two parts for each motion transmission device (the case 22 and the pulley 24), together with the flexible transmission; however, although the number of these parts is limited, they may be positioned and configured in various different ways according to the requirements of applications.

In particular, the transmission device described above can be used to form a control assembly that can be used in either a matching rotation or a reverse rotation configuration.

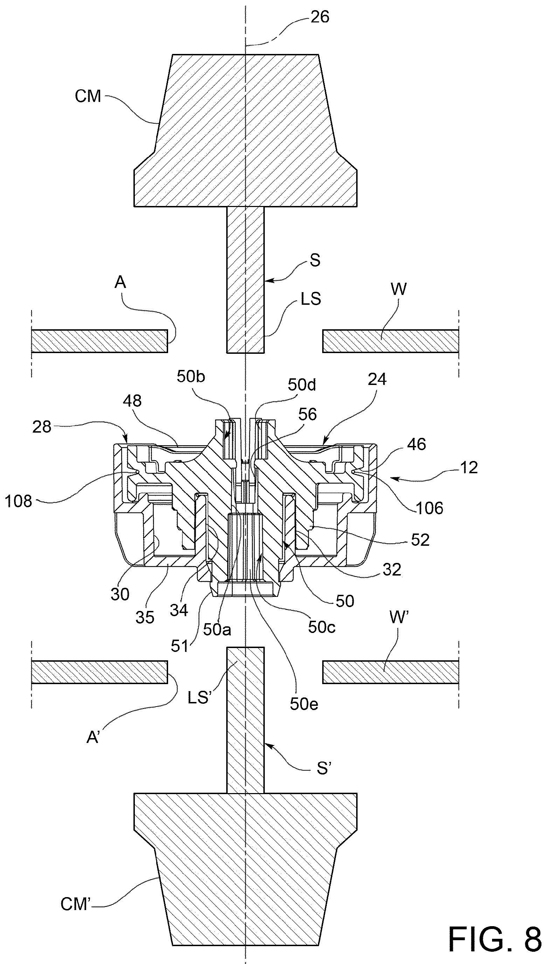

Figure 8 illustrates this aspect of the motion transmission device; the upper part of the figure shows the device configured for matching rotation, while the lower part shows the device configured for reversed rotation.

The upper part of Figure 8 shows a support wall W pierced by an opening A, a control member CM (such as a knob) and a motion transmission device 12 of the type described above. The control member CM and the motion transmission device 12 are positioned on opposite sides of the support wall W. The control member CM comprises a shaft S positioned to pass through the opening A and having (at least) a lateral surface portion LS whose shape mates with the prismatic surface portions 50d, 50e of the coupling seats 50b, 50c of the hub part 50 of the rotating pulley 24. The shaft S is fitted into the coupling seat 50b at the upper end of the hub part 50 of the rotating pulley 24. The device 12 has its pulley side facing the support wall W.

For use in the reverse rotation configuration, the control assembly simply has to be mounted with the motion transmission device rotated through 180° about the axis defined by the transmission cables, this situation being shown in the lower part of Figure 8.

Accordingly, the lower part of Figure 4 shows a support wall W' pierced by an opening A', a control member CM' (such as a knob), and the motion transmission device 12. The control member CM' and the motion transmission device 12 are positioned on opposite sides of the support wall W'. The control member CM' comprises a shaft S' positioned to pass through the opening A' and having (at least) a lateral surface portion LS' whose shape mates with the prismatic surface portions 50d, 50e of the coupling seats 50b, 50c of the hub part 50 of the rotating pulley 24. The shaft S' is fitted into the coupling seat 50c at the lower end of the hub part 50 of the rotating pulley 24. The device 12 has its base side facing the support wall W'.

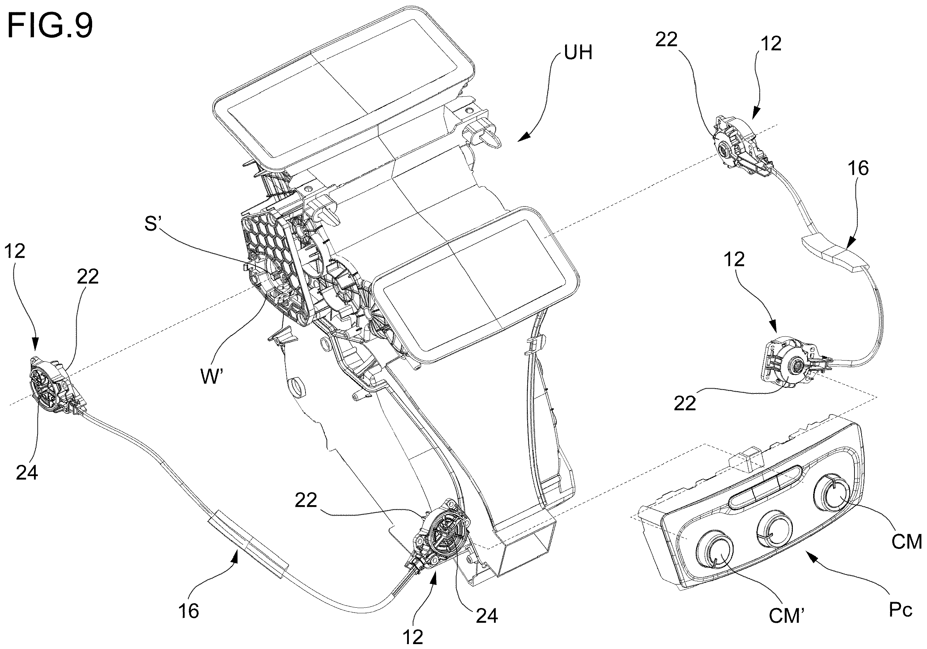

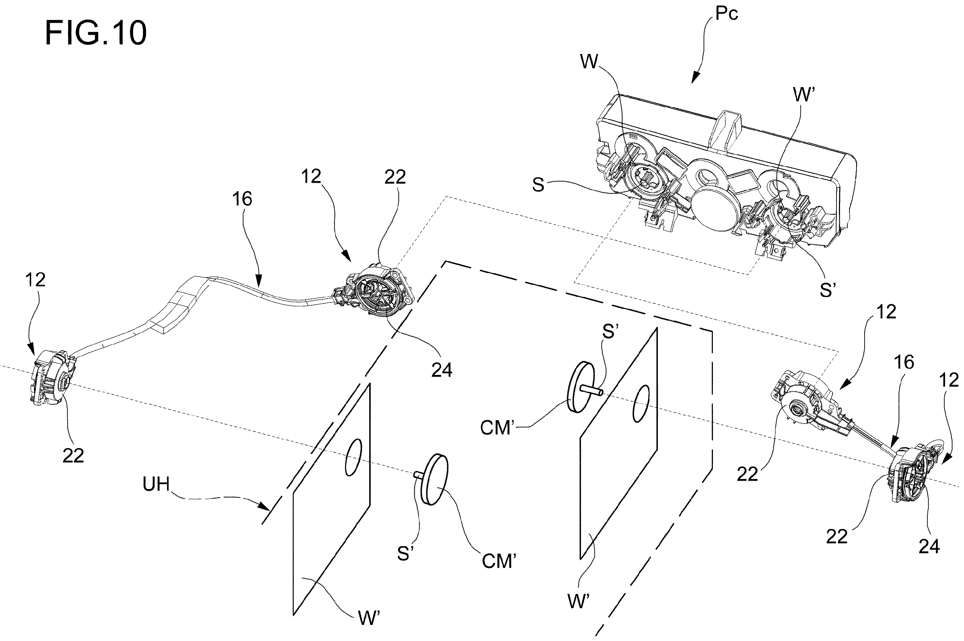

Figures 9 and 10 show two transmission assemblies of the type described above, one in a matching rotation configuration and the other in a reversed rotation configuration, associated with a control panel PC and with an air conditioning unit UH. The devices 12 associated with the control panel PC are coupled to knobs of this panel. The devices 12 associated with the air conditioning unit UH are coupled to rotary control members, such as flaps or shafts of electric actuators, which are shown schematically in Figure 10. In Figures 9 and 10, the references S, W and CM and S', W' and CM' respectively indicate that the devices 12 of the transmission assemblies are mounted in the configuration of the upper part and the lower part of Figure 8 respectively.

The assembly shown on the right in Figure 9 (on the left in Figure 10) is mounted in the matching rotation configuration. Both the devices 12 of this assembly are mounted in the configuration of the lower part of Figure 8.

The assembly shown on the left in Figure 9 (on the right in Figure 10) is mounted in the reversed rotation configuration. The device 12 associated with the control panel PC is mounted in the configuration of the upper part of Figure 8, while the device 12 associated with the air conditioning unit UH is mounted in the configuration of the lower part of Figure 8.

Clearly, the matching rotation configuration may also be obtained with both the devices 12 of the transmission assembly in the configuration of the upper part of Figure 8, while the reversed rotation configuration may also be obtained by reversing the configurations of the devices 12 relative to those described in relation to Figures 9 and 10.

## Claims

1. Control system comprising
a first and a second assembly (PC, UH), each assembly comprising a support wall (W, W') and a rotary control member (CM, CM'), and
a double-cable motion transmission assembly for transmitting motion from the control member (CM) of the first assembly (PC) to the control member (CM') of the second assembly (UH), comprising a first and a second device (12) which are interconnected by means of a flexible double-cable transmission (16), said first and second device, respectively, being fastened to the support wall (W) of the first assembly (PC) and to the support wall (W') of the second assembly (UH), wherein each device (12) comprises
- a case (22) of plastic material, on which is formed a circular seat (30), in the centre of which is formed a stem-like part (32) having a through hole (34), and
- a rotating pulley (24) of plastic material, capable of receiving a pair of control cables (106, 108) of the transmission (16) for attachment to it, said rotating pulley comprising a hub part (50) extending within the through hole (34),
- wherein, on each of the opposed ends of the hub part (50) of the rotating pulley (24), there is formed a respective first and second coupling seat (50b, 50c) capable of receiving a shaft (S; S') of a control member (CM; CM') and comprising at least one prismatic surface portion (50d, 50e),
wherein the control member (CM) of the first assembly (PC) and the first motion transmission device (12) are positioned on opposite sides of the support wall (W) of the first assembly (PC), and the control member (CM') of the second assembly (UH) and the second motion transmission device (12) are positioned on opposite sides of the support wall (W') of the second assembly,
**characterized in that** the first and second devices are constructively identical to one another, each control member comprises a shaft (S; S') having a lateral surface portion (LS; LS') whose shape is complementary to the prismatic surface portions (50d, 50e) of the coupling seats (50b, 50c) of the hub part (50) of the rotating pulley (24), the shaft (S) of the control member (CM) of the first assembly (PC) being fitted into the first coupling seat (50b) of the rotating pulley (24) of the first device (12), and the shaft (S') of the control member (CM') of the second assembly (UH) being fitted into the second coupling seat (50c) of the rotating pulley (24) of the second device (12), so that the first device (12) has its pulley side facing the support wall (W) of the first assembly (PC), and the second device (12) has its base side facing the support wall (W') of the second assembly (UH).

2. System according to Claim 1, wherein the prismatic surface portion (50d) of the first coupling seat (50b) at one end of the hub part (50) of the rotating pulley (24) is identical in shape, in a plan view from the respective side of the rotating pulley (24), to the prismatic surface portion (50e) of the second coupling seat (50c) at the other end of the hub part (50) of the rotating pulley (24).

## Patentansprüche

1. Steuersystem, mit
einer ersten und einer zweiten Baueinheit (PC, UH), wobei jede Baueinheit eine Stützwand (W, W') und ein Drehsteuerelement (CM, CM') aufweist, und
einer Doppelkabel-Bewegungsübertragungsbaueinheit zum Übertragen einer Bewegung von dem Steuerelement (CM) der ersten Baugruppe (PC) auf das Steuerelement (CM') der zweiten Baugruppe (UH), mit einer ersten und einer zweiten Einrichtung (12), die mittels einer flexiblen Doppelkabel-Übertragungsvorrichtung (16) miteinander verbunden sind, wobei die erste bzw. die zweite Einrichtung an der Stützwand (W) der ersten Baueinheit (PC) und an der Stützwand (W') der zweiten Baueinheit (UH) befestigt ist, bei dem jede Einrichtung (12) aufweist
- ein Gehäuse (22) aus einem Kunststoffmaterial, auf dem ein kreisförmiger Sitz (30) ausgebildet ist, in dessen Mitte ein stabähnlicher Teil (32) ausgebildet ist, der ein Durchgangsloch (34) aufweist, und
- eine Drehriemenscheibe (24) aus einem Kunststoffmaterial, die geeignet ist zum Aufnehmen eines Paars von Steuerkabeln (106, 108) der Übertragungsvorrichtung (16) für eine Anbringung daran, wobei die Drehriemenscheibe ein Nabenteil (50) aufweist, das sich innerhalb des Durchgangslochs (34) erstreckt,
- bei dem auf jedem der gegenüberliegenden Enden des Nabenteils (50) der Drehriemenscheibe (24) ein entsprechender erster und zweiter Kopplungssitz (50b, 50c) ausgebildet ist, der geeignet ist zum Aufnehmen einer Welle (S; S') eines Steuerelements (CM; CM') und wenigstens einen prismatischen Oberflächenbereich (50d, 50e) aufweist,
bei dem das Steuerelement (CM) der ersten Baueinheit (PC) und die erste Bewegungsübertragungseinrichtung (12) auf gegenüberliegenden Seiten der Stützwand (W) der ersten Baueinheit (PC) positioniert sind, und das Steuerelement (CM') der zweiten Baueinheit (UH) und die zweite Bewegungsübertragungseinrichtung (12) auf gegenüberliegenden Seiten der Stützwand (W') der zweiten Baueinheit positioniert sind,
**dadurch gekennzeichnet, dass** die ersten und zweiten Einrichtungen identisch zueinander konstruiert sind, wobei jedes Steuerelement eine Welle (S; S') aufweist, die einen Lateralflächenbereich (LS; LS') aufweist, dessen Form komplementär zu den prismatischen Oberflächenbereichen (50d, 50e) der Kopplungssitze (50b, 50c) des Nabenteils (50) der Drehriemenscheibe (24) ist, wobei die Welle (S) des Steuerelements (CM) der ersten Baueinheit (PC) in den ersten Kopplungssitz (50b) der Drehriemenscheibe (24) der ersten Einrichtung (12) eingepasst ist, und die Welle (S') des Steuerelements (CM') der zweiten Baueinheit (UH) in den zweiten Kopplungssitz (50c) der Drehriemenscheibe (24) der zweiten Einrichtung (12) eingepasst ist, so dass die erste Einrichtung (12) seine Riemenseite derart aufweist, dass sie auf die Stützwand (W) der ersten Baueinheit (PC) gerichtet ist, und die zweite Einrichtung (12) ihre Basisseite derart aufweist, dass sie auf die Stützwand (W') der zweiten Baueinheit (UH) gerichtet ist.

2. System nach Anspruch 1, bei dem der prismatische Oberflächenbereich (50d) des ersten Kopplungssitzes (50b) an einem Ende des Nabenteils (50) der Drehriemenscheibe (24) in einer Draufsicht von der entsprechenden Seite der Drehriemenscheibe (24) in seiner Form identisch zu dem prismatischen Oberflächenbereich (50e) des zweiten Kopplungssitzes (50c) an dem anderen Ende des Nabenteils (50) der Drehriemenscheibe (24) ist.

## Revendications

1. Système de commande comprenant
un premier et un second ensembles (PC, UH), chaque ensemble comprenant une paroi de support (W, W') et un organe de commande rotatif (CM, CM'), et
un ensemble de transmission de mouvement à double câble pour transmettre un mouvement de l'organe de commande (CM) du premier ensemble (PC) à l'organe de commande (CM') du second ensemble (UH), comprenant un premier et un second dispositifs (12) qui sont interconnectés au moyen d'une transmission à double câble flexible (16), lesdits premier et second dispositifs étant respectivement fixés à la paroi de support (W) du premier ensemble (W) et à la paroi de support (W') du second ensemble (UH), dans lequel chaque dispositif (12) comprend
un boîtier (22) en matière plastique, sur lequel est formé une assise circulaire (30), au centre de laquelle est formée une pièce en forme de tige (32) ayant un trou traversant (34), et
une poulie rotative (24) en matière plastique, pouvant recevoir une paire de câbles de commande (106, 108) de la transmission (16) pour la fixation à cette dernière, ladite poulie rotative comprenant une partie de moyeu (50) s'étendant à l'intérieur du trou traversant (34),
dans lequel, sur chacune des extrémités opposées de la partie de moyeu (50) de la poulie rotative (24), il est formé une première et seconde assise de couplage (50b, 50c) respective, pouvant recevoir un arbre (S, S') d'un organe de commande (CM, CM') et comprenant au moins une partie de surface prismatique (50d, 50e),
dans lequel l'organe de commande (CM) du premier ensemble (PC) et le premier dispositif de transmission de mouvement (12) sont positionnés sur des côtés opposés de la paroi de support (W) du premier ensemble (PC), et l'organe de commande (CM') du second ensemble (UH) et le second dispositif de transmission de mouvement (12) sont positionnés sur des côtés opposés de la paroi de support (W') du second ensemble,
**caractérisé en ce que** les premier et second dispositifs sont de construction identique, chaque organe de commande comprend un arbre (S, S') possédant une partie de surface latérale (LS, LS') dont la forme est complémentaire à celle des parties de surface prismatiques (50d, 50e) des assises de couplage (50b, 50c) de la partie de moyeu (50) de la poulie rotative (24), l'arbre (S) de l'organe de commande (CM) du premier ensemble (PC) étant monté dans la première assise de couplage (50b) de la poulie rotative (24) du premier dispositif (12), et l'arbre (S') de l'organe de commande (CM') du second ensemble (UH) étant monté dans la seconde assise de couplage (50c) de la poulie rotative (24) du second dispositif (12), de sorte que le premier dispositif (12) a son côté de poulie orienté vers la paroi de support (W) du premier ensemble (PC), et le second dispositif (12) a son côté de base orienté vers la paroi de support (W') du second ensemble (UH).

2. Système selon la revendication 1, dans lequel la partie de surface prismatique (50d) de la première assise de couplage (50b) à une extrémité de la partie de moyeu (50) de la poulie rotative (24) est de forme identique, dans une vue en plan depuis le côté respectif de la poulie rotative (24), à la partie de surface prismatique (50e) de la seconde assise de couplage (50c) à l'autre extrémité de la partie de moyeu (50) de la poulie rotative (24).
